# EUROPÄISCHE PATENTSCHRIFT

(11) **EP 1 214 536 B1**
(45) Veröffentlichungstag und Bekanntmachung des Hinweises auf die Patenterteilung: **02.04.2003**
(21) Anmeldenummer: 00958536.5
(22) Anmeldetag: 15.09.2000
(51) Int. Cl.: F16H 57/08

(54) **VERFAHREN ZUR HERSTELLUNG EINES PLANETENTRÄGERS**
METHOD FOR PRODUCING A PLANET CARRIER
PROCEDE POUR LA PRODUCTION D'UN PORTE-SATELLITES

(30) Priorität: 21.09.1999 DE 19945242
(43) Veröffentlichungstag der Anmeldung: 19.06.2002
(73) Patentinhaber: ZF FRIEDRICHSHAFEN Aktiengesellschaft, 88038 Friedrichshafen (DE)
(72) Erfinder: BAUKNECHT, Gert, D-88090 Immenstaad (DE); SKRABS, Alfred, D-66271 Sitterswald (DE)
(86) Internationale Anmeldenummer: EP0009007
(87) Internationale Veröffentlichungsnummer: WO01021984

(56) Entgegenhaltungen:
- CH-A- 415 215
- US-A- 3 958 389
- US-A- 4 043 021
- US-A- 5 658 215
- PATENT ABSTRACTS OF JAPAN vol. 1996, no. 11, 29. November 1996 (1996-11-29) -& JP 08 170695 A (NIPPON SEIKO KK), 2. Juli 1996 (1996-07-02)
- PATENT ABSTRACTS OF JAPAN vol. 017, no. 196 (M-1397), 16. April 1993 (1993-04-16) -& JP 04 341641 A (NISSAN MOTOR CO LTD), 27. November 1992 (1992-11-27)
- "FROM DESIGN TO PROCESS, TO PART... SEAMLESSLY" AUTOMOTIVE ENGINEERING INTERNATIONAL,US,SAE INTERNATIONAL, Bd. 106, Nr. 2, 1. Februar 1998 (1998-02-01), Seiten 105-108, XP000737277 ISSN: 0098-2571

## Beschreibung

Die vorliegende Erfindung betrifft ein Verfahren zur Herstellung eines Planetenträgers für ein Planetengetriebe, das ein Sonnenrad, ein oder zwei Hohlräder, mindestens ein Planetenrad und eine Antriebswelle aufweist mit den Maßnahmen gemäß Oberbegriff von Anspruch 1, wie sie aus der JP-A-04341641 bekannt sind. Dort werden die Bolzen mit den Scheiben verstemmt.

Viele Aufgabenstellungen in der Antriebstechnik, beispielsweise in Kraftfahrzeuggetrieben, verlangen die Realisierung extremer Übersetzungen. Planetengetriebe sind besonders gut geeignet, hohe Übersetzungen mit einer kompakten Bauweise zu vereinen. Als Beispiel dafür sei das sogenannte Wolfrom-Koppelgetriebe genannt, das bei einer hohen Übersetzung noch hohe Wirkungsgrade aufweist. Als Wolfrom-Getriebe bezeichnet man ein besonders einfaches Koppelgetriebe. Die Antriebswelle ist mit einem Sonnenrad verbunden, das mit einem Planetenräderblock zusammenarbeitet. Das Planetenrad stützt sich an einem innenverzahnten Hohlrad ab, welches mit dem Gehäuse fest verbunden ist, wobei der Steg als Planetenträger leer mitläuft. Die Bewegung wird über den Planetenträger und das Planetenrad, das beispielsweise als Stufenplanet ausgebildet ist, weitergeleitet. Das Planetenrad kämmt seinerseits wieder mit einem zweiten innenverzahnten Hohlrad, das den Abtrieb bildet.

Ein derartiges Planetengetriebe eignet sich für eine kompakte Bauweise, die auf engem Raum hohe Übertragungsdichten ermöglicht.

Insbesondere in der Handhabungstechnik werden zur Leistungsübertragung von hochtourigen Antriebsmotoren hoch untersetzende Getriebe benötigt. Diese Getriebe sollen bei einem Lastrichtungswechsel ein kleines Verdrehspiel aufweisen. Ferner sollen sie sich durch eine drehstarre, leichte und kompakte Bauweise auszeichnen.

Aus der DE A 195 10 499 der Anmelderin ist ein Planetengetriebe bekannt, mit einem angetriebenen Sonnenrad, einem ersten und einem zweiten jeweils innenverzahnten Hohlrad, von denen das erste feststeht und das zweite drehantreibbar gelagert ist und den Abtrieb bildet und mit Planetenrädern, die auf geneigt verlaufenden Achsen in einem Planetenträger in der Weise gelagert sind, dass sie in ständigem Zahneingriff mit dem Sonnenrad und dem Hohlrad stehen. Die Planetenräder sind als Stufenplaneten mit kleinen und großen Stufenrädern ausgebildet, wobei die Verzahnungen der Stufenräder verschiedene Module aufweisen.

Ein weiteres Planetengetriebe mit einem angetriebenen Sonnenrad und zwei innenverzahnten Hohlrädern ist aus der DE A 43 25 295 der Anmelderin bekannt. Bei diesem Planetengetriebe sind die auf Planetenachsen im Planetenträger gelagerten Planetenachsen unter einem spitzen Winkel relativ zu einer Mittelachse des Planetengetriebes geneigt angeordnet. Der hier leer mitlaufende Planetenträger ist über ein Kugellager auf einer Buchse reibungsarm gelagert, wobei die Buchse zur Einstellung der Axialposition des Planetenträgers an einem Ende über eine Schulter an einem kugellager anliegt und über einen Sicherungsring an einer Distanzscheibe festgelegt werden kann.

Hierdurch wird ein spielfreies Planetengetriebe geschaffen, bei dem die erzielbare Genauigkeit in der Herstellung, die die Grundlage für eine enge Spieleinstellung bildet, groß ist.

Ein wesentliches Bauteil eines derartigen Planetengetriebes ist der Planetenträger, der in der Regel aus einem geschmiedeten Bauteil und einer gestanzten oder feingeschnittenen Führungsscheibe besteht, die miteinander verschweißt werden. Für dieses Herstellungsverfahren sind eine Vielzahl von Bearbeitungsschritten erforderlich, einschließlich eines zusätzlichen Schweißprozesses.

Wegen des beim Verschweißen häufig auftretenden Verzuges der Bauteile ist eine Nachbearbeitung des Planetenträgers nach der Herstellung erforderlich.

Es wurden auch bereits gegossene Planetenträger verwendet, die jedoch bei ihrer Herstellung einen ebenso hohen Bearbeitungsaufwand erfordern. Dazu kommt, dass die für die Herstellung der gegossenen Planetenträger erforderlichen teuren Gußformen eine geringere Standzeit aufweisen als die für das Feinschneiden der Führungsscheiben erforderlichen Umformwerkzeuge.

Aufgabe der Erfindung ist es, ein Verfahren zur Herstellung eines Planetenträgers zu schaffen, das erheblich einfacher in der Durchführung ist, sodass die Herstellungskosten für den Planetenträger gesenkt werden können.

Die Lösung dieser Aufgabe erfolgt mit den im Anspruch 1 angegebenen Merkmalen; ein vorteilhaftes Ausführungsbeispiel ist im Unteranspruch beschrieben.

Erfindungsgemäß ist also vorgesehen, dass mehrere, vorzugsweise zwei Führungsscheiben mit einer der Anzahl der aufzunehmenden Planetenräder entsprechenden Anzahl von Nietbolzen in einer Presse mittels einer Ringzacke ausgerichtet, zusammengefügt und in einem Hub miteinander vernietet werden. Die Führungsscheiben werden dabei als Feinschneidteile hergestellt, wobei je zwei auf einer Stegwelle angeordnete Führungsscheiben mit einer der Anzahl der aufzunehmenden Planeten entsprechenden Anzahl von Nietbolzen miteinander verbunden werden, indem in die Schultern der Zapfen eine die Längsachse des Nietbolzens konzentrisch umgebende Ringzacke eingearbeitet wird; das die Führungsscheibe in Richtung Schulter beaufschlagende Werkzeug der Presse ist ebenfalls mit einer Ringzacke versehen, die die gleiche Geometrie aufweist und damit der Ringzacke der Schulter genau gegenüber angeordnet ist, sodass während des Stauchnietschrittes keine unzulässige Verformung der Führungsscheibe außerhalb der Ringzacke auftritt.

Durch das verkettbare Fügen der Bauteile in der Presse entstehen erhebliche Kostenvorteile gegenüber den herkömmlichen Guß- bzw. Schweißverfahren. Ein weiterer Kostenvorteil entsteht dadurch, dass Späne sowie deren teure Entsorgung vermieden werden.

Eine Qualitätsverbesserung des fertigen Planetenträgers kann durch eine deutlich geringere Unwucht des Trägers erzielt werden, da eine positionsgenaue Vernietung zusammen mit einem Entfall der größeren Schmiedetoleranzen problemlos erzielt werden kann.

Ferner sei noch bemerkt, dass der erfindungsgemäß hergestellte Planetenträger leichter als die herkömmlichen Planetenträger ausgeführt werden können, wodurch eine Gewichtseinsparung ermöglicht wird.

Im folgenden wird die Erfindung anhand der Zeichnung näher erläutert, in der ein vorteilhaftes Ausführungsbeispiel dargestellt ist.
Es zeigen:
- Fig. 1: einen Querschnitt durch einen Planetenträger und
- Fig. 2: eine vergrößerte Darstellung eines Nietbolzens vor bzw. nach Durchführung des Stauchnietschrittes.

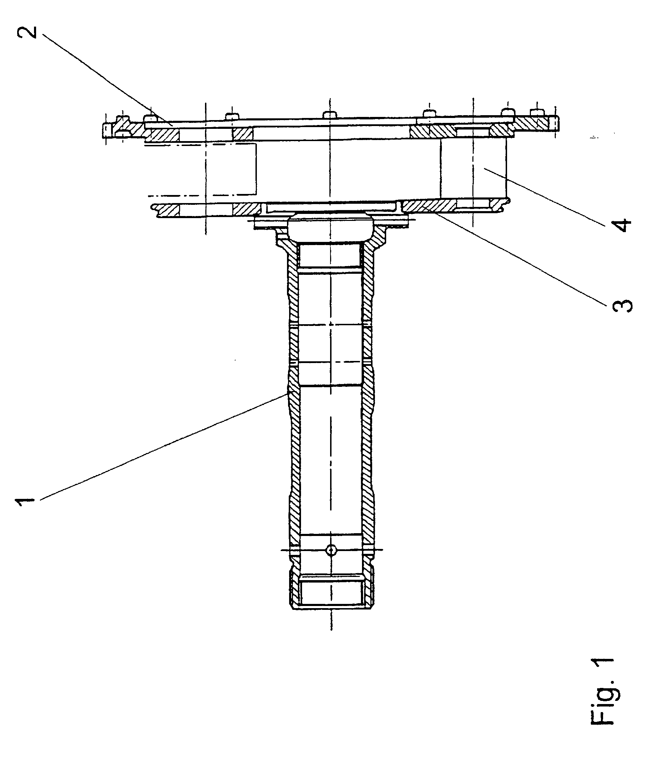

Bei dem in Fig. 1 schematisch dargestellten Planetenträger ist mit 1 die herkömmliche Stegwelle bezeichnet und mit 2 und 3 zwei als Feinschneidteile hergestellte im Abstand voneinander und parallel zueinander auf der Stegwelle angeordnete Führungsscheiben, die mit einer Anzahl von Nietbolzen 4, deren Anzahl gleich der Anzahl der aufzunehmenden Planeten ist, in erfindungsgemäßer Weise miteinander verbunden werden.

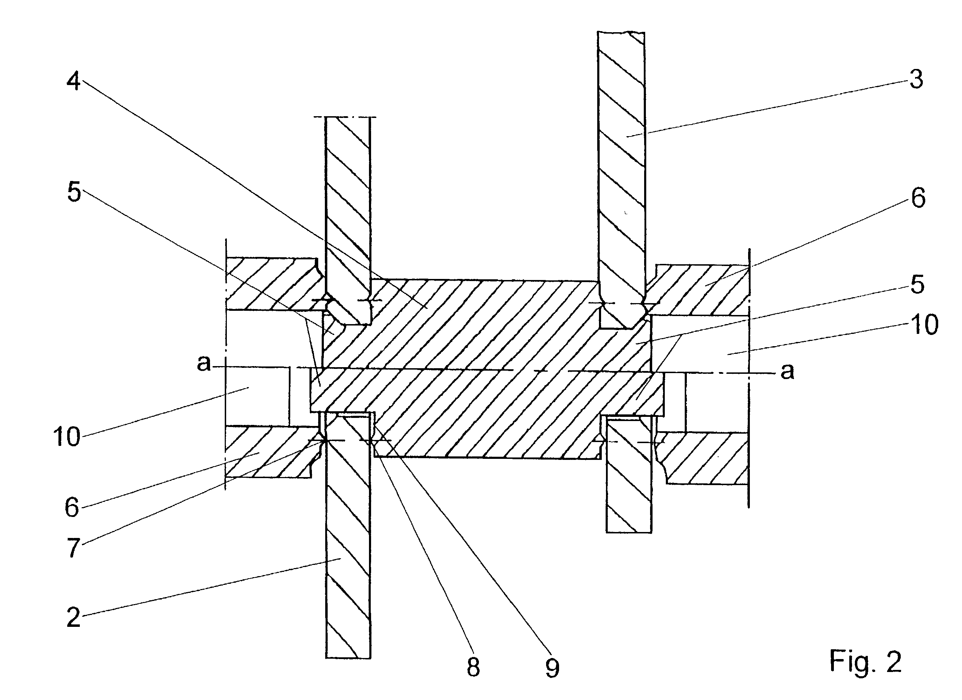

Fig. 2 zeigt nun eine vergrößerte Schnittdarstellung durch einen der Nietbolzen 4 und Teile der beiden durch ihn miteinander verbundenen Führungsscheiben 2, 3, wobei in der linken Hälfte von Fig. 2 die Lage der Teile zueinander vor dem Stauchnietschritt und in der rechten Hälfte von Fig. 2 getrennt durch die Längsachse a-a die Lage der Teile zueinander nach Beendigung des Stauchnietschrittes dargestellt ist.

Mit 4 ist wieder einer der Nietbolzen bezeichnet, der an seinen beiden Enden jeweils um einen Zapfen 5 verlängert ist, dessen Durchmesser geringer ist als der Durchmesser des eigentlichen Nietbolzens im Bereich zwischen den beiden Führungsscheiben 2, 3, sodass zu beiden Seiten des Nietbolzenes eine Schulter 9 gebildet wird, auf der eine der Seiten der Führungsscheibe 2, 3 zu liegen kommt.

Erfindungsgemäß wird nun jede Schulter 9 mit einer den Zapfen 5 konzentrisch umgebenden Ringzacke 8 versehen und zwar sowohl auf der in Fig. 2 oben, d. h. der Scheibe 2 zugewandten Seite des Nietbolzens, als auch der in Fig. 2 unten dargestellten, der Führungsscheibe 3 zugewandten Seite des Nietbolzens 4. Mit 6 ist das Werkzeug einer Presse bezeichnet und mit 10 der Stempel dieser Presse, welcher von dem Stempel 6 konzentrisch umgeben wird, wobei diese beiden Bauteile unabhängig voneinander bewegbar sind.

Auf den den Führungsscheiben 2, 3 zugewandten Enden der Werkzeuge 6 sind nun ebenfalls Ringzacken 7 ausgebildet, die eine identische Geometrie zu den Ringzacken 8 in den Schultern 9 des Nietbolzens aufweisen und diesen genau gegenüber liegen. Während des Stauchnietschrittes, in dem also die Werkzeuge 6 die ihnen zugewandten Stellen der Führungsscheiben 2, 3 beaufschlagen, wird der Werkstoff der Führungsscheiben 2 und 3 derart eingespannt, dass während des Stauchnietschrittes der Zapfen 5 durch die Stempel 10 keine unzulässige Verformung der Führungsscheiben 2, 3 außerhalb der Ringzacken auftritt. Durch dieses erfindungsgemäße Verfahren können die geforderten geometrischen Maße ohne nachgeschaltete Bearbeitungsprozesse eingehalten werden. Mit anderen Worten sorgt die besondere Ausführung der Schultern des Nietbolzens sowie der Unterseite der Werkzeuge mit einer Ringzacke dafür, dass der Raum zum Aufstauchen der Zapfen im Material der Führungsscheiben abgesperrt wird.

### Bezugszeichen

- 1: Stegwelle
- 2: Führungsscheibe
- 3: Führungsscheibe
- 4: Nietbolzen
- 5: Zapfen
- 6: Werkzeug
- 7: Ringzacke
- 8: Ringzacke
- 9: Schulter
- 10: Stempel

## Patentansprüche

1. Verfahren zur Herstellung eines Planetenträgers für ein Planetengetriebe, das ein Sonnenrad, ein oder zwei Hohlräder, mindestens ein Planetenrad und eine Antriebswelle aufweist, wobei der Planetenträger eine Stegwelle (1) und zwei parallel miteinander verbundene im Abstand voneinander und parallel zueinander angeordnete Führungsscheiben (2, 3) aufweist, welche mit einer der Anzahl der aufzunehmenden Planeten entsprechenden Anzahl von Nietbolzen (4) miteinander verbunden werden, **dadurch gekennzeichnet, dass** die Führungsscheiben (2, 3) als Feinschneidteile hergestellt werden, dass die zwei auf der Stegwelle (1) angeordneten Führungsscheiben (2, 3) mit den Nietbolzen (4) in einer Presse in einem Arbeitsgang dadurch miteinander verbunden werden, dass in die Schultern (9) der mit Zapfen (5) versehenen Nietbolzen (4) die Längsachse der Nietbolzen (4) konzentrisch umgebende Ringzacken (8) eingearbeitet werden, und dass das die Führungsscheiben (2, 3) in Richtung Schulter (9) beaufschlagende Werkzeug (6) der Presse mit einer Ringzacke (7) versehen wird, die die gleiche Geometrie aufweist wie die Ringzacke (8) der Schulter (9) und die der Ringzacke (8) der Schulter (9) genau gegenüberliegend angeordnet ist, sodass während des Stauchnietschrittes keine unzulässige Verformung der Führungsscheiben (2, 3) außerhalb der Ringzacken (7, 8) auftritt.

2. Verfahren nach Anspruch 1, **dadurch gekennzeichnet, dass** das Werkzeug (6) einen Stempel (10) konzentrisch umgibt, mit dem die freie Oberfläche des Zapfens (5) in Richtung Führungsscheiben (2, 3) verformt wird.

## Claims

1. Method for manufacturing a planet carrier for a planetary transmission provided with a sun gear, one or two ring gears, at least one planet gear and one drive shaft, with the planet carrier being provided with a spider shaft (1) and two parallel guide pulleys (2, 3), which are linked by rivet bolts (4), **characterized in that** the guide pulleys (2, 3) are fine-cut parts; that the two guide pulleys (2, 3) arranged on the spider shaft (1) are linked by rivet bolts (4) in a press during a single work process in such a way that annular jags (8) are sunk into the shoulders (9) of the lug (5)-provided rivet bolts (4) in a manner that they are concentrically arranged around the longitudinal axis of the rivet bolts (4); and that the press tool (6) acting on the guide pulleys (2, 3) in the direction of the shoulder (9) is provided with an annular jag (7) having the same geometry as the annular jag (8) of the shoulder (9), and which is arranged exactly opposite the annular jag (8) of the shoulder (9), so that during compression-riveting there is no inadmissible deformation of the guide pulleys (2 ,3) outside the annular jags (7, 8).

2. Method according to claim 1, **characterized in that** the tool (6) concentrically surrounds a punch (10), with which the free surface of the lug (5) is deformed in the direction of the guide pulleys (2 ,3).

## Revendications

1. Procédé de fabrication d'un porte-satellites pour un train épicycloïdal, qui comprend une roue planétaire, une ou deux couronnes, au moins un pignon satellite et un arbre d'entrée, le porte-satellites comprenant un arbre de voile (1) et deux disques de guidage (2, 3) assemblés parallèlement entre eux, disposés à un certain écartement et parallèlement entre eux, qui sont assemblés entre eux à l'aide d'un nombre de rivets (4) qui correspond au nombre des satellites à recevoir, **caractérisé en ce que** les disques de guidage (2, 3) sont fabriqués sous la forme de pièces de précision découpées, **en ce que** les deux disques de guidage (2, 3) montés sur l'arbre de voile (1) sont assemblés entre eux à l'aide des rivets (4) dans une presse en une passe de travail par le fait que des protubérances annulaires (8), qui entourent concentriquement l'axe longitudinal des rivets (4), sont usinées dans les épaulements (9) des rivets (4) pourvus de tétons (5), et par le fait que l'outil (6) de la presse, qui attaque les disques de guidage (2, 3) en direction des épaulements (9), est pourvu d'une protubérance annulaire (7) qui présente la même géométrie que la protubérance annulaire (8) de l'épaulement (9) et qui est disposée exactement en face de la protubérance annulaire (8) de l'épaulement (9), de sorte que, pendant l'étape de refoulement du rivet, il ne se produit aucune déformation inadmissible des disques de guidage (2, 3) à l'extérieur des protubérances annulaires (7, 8).

2. Procédé selon la revendication 1, **caractérisé en ce que** l'outil (6) entoure un poinçon (10) avec lequel la surface libre du téton (5) est déformée en direction des disques de guidage (2, 3).
